# EUROPÄISCHE PATENTSCHRIFT

(11) **EP 2 070 648 B1**
(45) Veröffentlichungstag und Bekanntmachung des Hinweises auf die Patenterteilung: **08.06.2011**
(21) Anmeldenummer: 08020774.9
(22) Anmeldetag: 28.11.2008
(51) Int. Cl.: B23Q 7/14

(54) **Förderbandmodul**
Transport belt module
Module de bande de transport

(30) Priorität: 13.12.2007 EP 07123174; 13.12.2007 EP 07123171
(43) Veröffentlichungstag der Anmeldung: 17.06.2009
(73) Patentinhaber: ETA SA Manufacture Horlogère Suisse, 2540 Grenchen (CH)
(72) Erfinder: Senn, Jean-Philippe, 2525 Le Landeron (CH); Baer, Manfred, 78147 Vöhrenbach (DE); Durand, Friedrich, 4522 Rüttenen (CH)
(74) Vertreter: Ravenel, Thierry Gérard Louis

(56) Entgegenhaltungen:
- EP-A- 1 862 411
- WO-A-2006/102691
- DE-A1- 19 936 004
- DE-A1-102006 002 082
- DE-A1-102006 057 266
- DE-B3-102006 038 185
- US-A- 6 050 395

## Beschreibung

Die vorliegende Erfindung betrifft ein Förderbandmodul zum Einbau in ein Fördersystem oder eine Fertigungslinie, insbesondere zum Einbau in eine modulare Fertigungslinie, wie sie in der Europäischen Patentanmeldung mit dem Aktenzeichen EP 07 12 3174 der gleichen Anmelderin beschrieben ist. Fertigungslinien mit Förderbändern kommen heute in fast allen Industriezweigen zur Anwendung, insbesondere in der Elektronik- und Automobilindustrie, aber auch in der Uhrmacherei. DE-199 36 004 offenbart ein Fördenbandmodul nach dem Oberbegriff von Anspruch 1.

In einer Fertigungslinie wird dabei üblicherweise eine Vielzahl von Förderbandabschnitten verwendet, die zu einem Förderband zusammengesetzt werden. Die einzelnen Förderbandabschnitte laufen um drehbare Umlenkwalzen, von denen jeweils mindestens eine angetrieben ist. Je nach Art der Produktionslinie sind zusätzlich Montageinheiten, Zuführeinheiten zum Zuführen von Teilen, Sensoren und in den meisten Fällen eine zentrale Steuerung vorgesehen und wirken mit den Förderbändern zusammen.

Förderbänder müssen aufgrund von Verschleisserscheinungen regelmässig ausgetauscht werden. Dies ist bei herkömmlichen Produktionslinien sehr aufwändig. Meist muss die gesamte Produktionslinie angehalten werden, damit das Förderband ausgetauscht werden kann,

Der vorliegenden Erfindung liegt daher die Aufgabe zugrunde, eine Möglichkeit bereitzustellen, die einen schnellen und einfachen Austausch eines Förderbandabschnittes ermöglicht.

Diese Aufgabe wird erfindungsgemäss durch ein Förderbandmodul gemäss Anspruch 1 gelöst.

Das Förderbandmodul besitzt einen Korpus, an dem wenigstens eine Umlenkwalze und ein weiteres Umlenkelement drehbar gelagert sind, um welche ein Förderband geführt ist, sowie einen Antrieb zum Antreiben wenigstens der Umlenkwalze. Der Antrieb ist in dem Korpus angeordnet. Das Modul besitzt ferner mechanische und elektrische Verbindungselemente zum Verbinden des Moduls mit einem Fördersystem, sowie wenigstens einen Sensor. Der Sensor ist dabei derart unter dem Förderband angeordnet, dass Objekte, die auf dem Förderband transportiert werden, mit Hilfe des Sensors erfasst werden können.

Die mechanischen und elektrischen Verbindungselemente können beispielsweise Buchsen sein, in die passende elektrische Steckverbinder eingesteckt werden können. Über diese Verbindungselemente kann das Modul mit Strom versorgt werden, und es können Steuersignale von einer externen Steuerung an das Förderbandmodul gegeben werden. Gleichzeitig können die von dem in das Modul integrierten Sensor erfassten Signale an eine externe Steuerung gegeben werden.

Wenn das Förderband oder auch ein anderer Bestandteil des Moduls ausgetauscht werden muss, kann das gesamte Modul mit wenigen Handgriffen ausgewechselt werden. Es genügt, die über die Verbindungselemente hergestellten mechanischen und elektrischen Verbindungen zu trennen, das Modul herauszunehmen, ein neues Modul einzusetzen, und die Verbindungen mit dem neuen Modul erneut herzustellen. Dabei muss die Produktionslinie nicht notwendigerweise angehalten werden.

Das aus der Produktionslinie entfernte Modul kann nun ohne Zeitdruck repariert werden, beispielsweise kann ein verschlissenes Förderband demontiert und durch ein neues Förderband ersetzt werden.

Gemäss einer bevorzugten Ausführungsform der Erfindung ist die Umlenkwelle beidseitig seitlich ausserhalb des Transportbandes fest in den Korpus eingespannt, und auf der Umlenkwelle sind mehrere voneinander beabstandete Gleitbuchsen drehbar gelagert, wobei die Umlenkwelle über zwischen den Gleitbuchsen eingreifende Abstützelemente abgestützt ist. Eine derartige Umlenkung eines Förderbandes ist nicht vorveröffentlichten aus der Deutschen Patentanmeldung mit dem Aktenzeichen 10 2006 038 185.8 bekannt. Diese Umlenkung über eine Umlenkwelle mit drehbar gelagerten Gleitbuchsen und dazwischen liegenden Abstützelementen erlaubt es, den Radius der Umlenkung sehr klein zu halten, und dennoch eine wenig verschleissanfällige und robuste Umlenkung zu erhalten.

Die Gleitbuchsen können dabei aus Gleitlagerkunststoff, aus einem mit PTFE und/oder Graphit beschichteten Metall oder aus Sinterbronze bestehen.

Gemäss einer bevorzugten Ausführungsform der Erfindung weist das Förderbandmodul wenigstens zwei weitere Umlenkwalzen auf, um die ein zweites Förderband geführt ist, welches im Wesentlichen parallel zu dem ersten Förderband verläuft. Man erhält damit ein zweispuriges Förderbandmodul, was für gewisse Anwendungen von Vorteil ist. Dabei ist vorzugsweise für jedes der beiden Förderbänder ein separater Antrieb vorgesehen. Im Prinzip ist es jedoch auch denkbar, beide Förderbänder über einen gemeinsamen Antrieb anzutreiben, wobei dann gegebenenfalls Kupplungselemente vorgesehen werden können, die es ermöglichen, unterschiedliche Antriebsrichtungen oder unterschiedliche Bandgeschwindigkeiten für die beiden Bänder vorzusehen.

Im Prinzip kann es sich im Übrigen sowohl bei dem ersten Antrieb als auch bei dem optionalen zweiten Antrieb um einen einfachen Antriebsmotor handeln, der das Transportband mit konstanter Geschwindigkeit antreibt. Es ist aber auch möglich, einen Antrieb mit variabler Geschwindigkeit und/oder mit zwei möglichen Antriebsrichtungen vorzusehen. Wenn zwei parallele Förderbänder vorgesehen sind, werden diese vorzugsweise in einander entgegen gesetzte Richtungen angetrieben.

Im Folgenden soll die Erfindung anhand eines bevorzugten Ausführungsbeispiels und unter Bezugnahme auf die beigefügten Zeichnungen näher beschrieben werden.

Dabei zeigen die Zeichnungen im Einzelnen:
- Fig. 1 :: eine perspektivische Ansicht eines Förderbandmoduls von oben,
- Fig. 2:: eine perspektivische Ansicht des Förderbandmoduls aus Fig. 1 von unten.

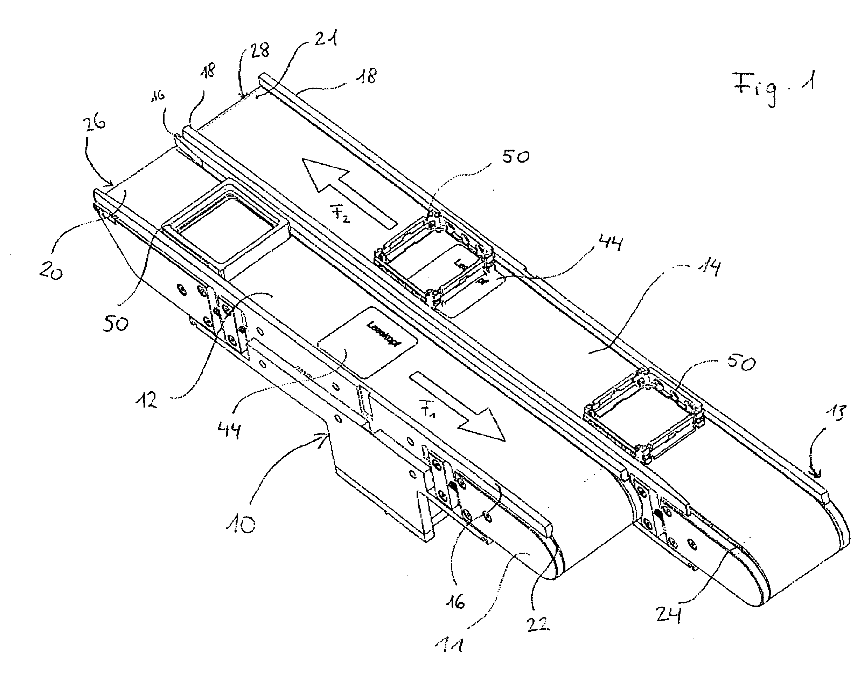

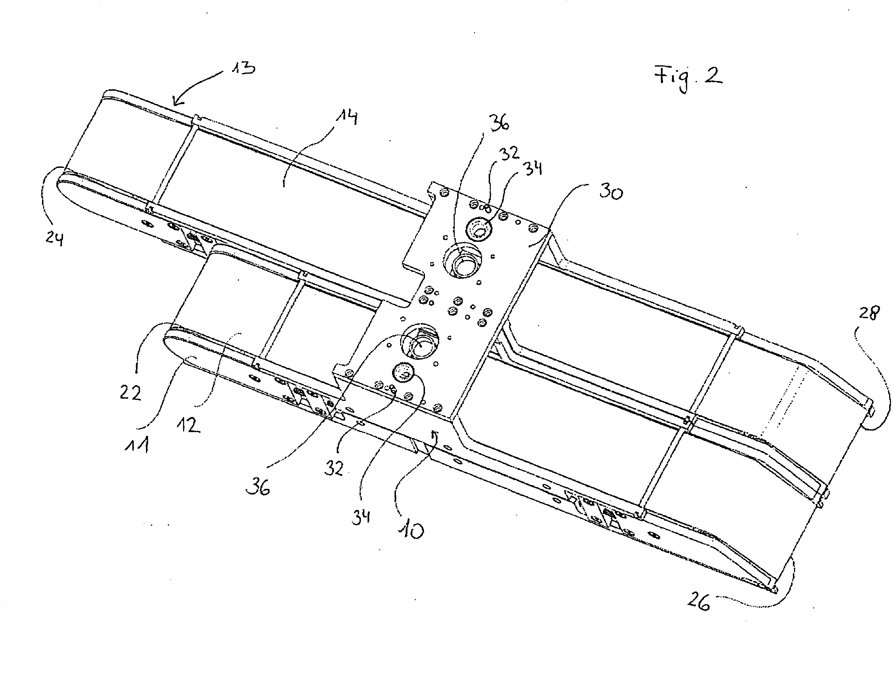

Fig. 1 zeigt ein Förderbandmodul zum Einbau in eine modulare Fertigungslinie in einer perspektivischen Ansicht von oben. Das Förderbandmodul besitzt einen Korpus 10, der in Längsrichtung von Seitenwänden 11, 13 begrenzt ist. Das in den Fig. 1 und 2 dargestelite Förderbandmodul ist zweispurig, das heisst es besitzt zwei parallel zueinander und zu den Seitenwänden 11, 13 verlaufende Förderbänder 12, 14.

In der Fig. 1 sind beispielhaft drei Werkstückträger 50 dargestellt, die im Wesentlichen die Form von Tellern mit einem eine rechteckige Grundfläche umgebenden Rahmen besitzen, und die auf den Förderbändern 12, 14 befördert werden. Jedes der beiden Förderbänder 12, 14 ist gerade breit genug für einen Werkstückträger 50. An den Aussenseiten der Förderbänder 12, 14 dienen sich in Förderrichtung F1, F2 Begrenzungsstege 16 (für das Band 12) bzw. 18 (für das Band 14) als Führung für die Werkstückträger 50.

Das in Fig. 1 rechts bzw. hinten liegende Förderband 14 ist länger als das vorne bzw. links liegende Förderband 12. Während die beiden Förderbänder 12, 14 auf der in Fig. 1 links liegenden Seite quer zu ihren Förderrichtungen F1, F2 bündig miteinander abschliessen, steht das längere Förderband 14 auf der anderen Seite über das kürzere Förderband 12 über. Selbstverständlich können bei einem zweispurigen Förderbandmodul auch zwei gleich lange Förderbänder oder eine beliebige andere Anordnung zweier unterschiedlich langer Förderbänder gewählt werden.

Beide Förderbänder 12, 14 sind jeweils an einer Seite (in Fig. 1 rechts) um eine Umlenkwalze 22, 24 geführt, die drehbar an dem Korpus 10 gelagert ist.

Auf der anderen Seite (in Fig. 1 links) sind beide Förderbänder 12, 14 jeweils um eine im Vergleich zu den Umlenkwalzen 22, 24 sehr dünne Umlenkwelle 26, 28 mit darauf drehbar gelagerten Gleitbuchsen (in den Figuren nicht sichtbar) geführt, so dass eine Übergabezunge 20 bzw. 21 gebildet wird. Die Umlenkwellen 26, 28 selbst sind nicht drehbar an dem Korpus 10 gelagert, sondern fest in den Korpus 10 eingespannt. Genauer ist die Umlenkwelle 26. um die das erste Förderband 12 geführt ist, zwischen der linken Seitenwand 11 des Korpus und einer Zwischenwand eingespannt, während die Umlenkwelle 28, um die das zweite Förderband 14 geführt ist, zwischen der rechten Seitenwand 13 des Korpus und einer Zwischenwand sitzt. Auf den Umlenkwellen 26, 28 sind jeweils mehrere voneinander beabstandete Gleitbuchsen beweglich gelagert. Zwischen den in den Figuren nicht dargestellten Gleitbuchsen sind ebenfalls in den Figuren nicht dargestellte Abstützelemente vorgesehen, die dafür sorgen, dass sich die dünnen Umlenkwellen 26, 28 nicht durchbiegen. Durch den kleinen Radius der abgestützten Umlenkwelle können auch kleine Teile von einem weiteren Förderbandmodul an das hier dargestellte Modul übergeben werden, ohne in einen Zwischenraum zwischen den Umlenkpunkten der jeweiligen Förderbänder zu fallen.

Die Umlenkwalzen 22, 24 werden jeweils von einem in den Figuren nicht dargestellten Antrieb angetrieben, der in dem Korpus 10 untergebracht ist. Vorzugsweise handelt es sich dabei um einen Elektromotor mit geeigneten Kraftübertragungsmitteln. Wie in Fig. 1 durch die beiden Pfeile F1, F2 angedeutet, werden die beiden Förderbänder 12, 14 mit einander entgegen gesetzten Förderrichtungen betrieben. Der Antrieb kann jedoch so ausgebildet sein, dass er einen Richtungswechsel ermöglicht.

In das Förderbandmodul integriert sind zudem wenigstens zwei in den Figuren nicht dargestellte RFID - Leseköpfe. In Fig. 1 sind die Bereiche, unterhalb derer die beiden Leseköpfe liegen, mit der Bezugsziffer 44 bezeichnet. Man sieht, dass jeweils ein Lesekopf unter jedem Förderband 12, 14 zu liegen kommt, sodass ein an einem Werkstückträger 50 befestigter RFID - Transponder ausgelesen werden kann, wenn der Werkstückträger 50 auf einem der Förderbänder 12, 14 den darunter liegenden Lesekopf passiert. Zusätzlich, oder auch an Stelle der RFID-Leseköpfe, können auch andere Sensoren in das Förderbandmodul integriert werden, beispielsweise induktive oder kapazitive Sensoren, Lichtsensoren etc.)

Fig. 2 zeigt das in Fig. 1 dargestellte Förderbandmodul aus einer anderen Perspektive, nämlich von unten, und man erkennt eine Anschlussplatte 30, die sich quer über beide Förderbänder 12, 14 von einer Seitenwand 11 des Korpus 10 bis zur anderen 13 erstreckt. An dieser Anschlussplatte sind verschiedene Verbindungselemente 32, 34, 36 vorgesehen, über welche das Förderbandmodul an ein Fördersystem oder eine Fertigungslinie angeschlossen werden kann. Zum Herstellen einer mechanischen Verbindung und zur korrekten Ausrichtung des Moduls in Bezug auf andere, gleichartige Module oder sonstige Elemente einer Fertigungslinie dienen Verbindungsstifte 32 sowie Zentrierbuchsen 34. Darüber hinaus sind elektrische Steckkontakte 36 vorgesehen, die sowohl zur Anbindung an ein Netzwerk als auch zur Energieversorgung, beispielsweise für den Antrieb, dienen können.

Das Förderbandmodul kann somit von aussen mit Energie versorgt werden, und kann über ein Netzwerk mit anderen Elementen einer Fertigungslinie oder mit einer externen Steuerung Informationen und Steuersignale austauschen.

Es sei darauf hingewiesen, dass das in den Figuren gezeigte Ausführungsbeispiel der Erfindung lediglich zur Veranschaulichung der in den Patentansprüchen definierten Erfindung dient, und keinesfalls einschränkend zu verstehen ist. Insbesondere ist es keineswegs notwendig, dass das erfindungsgemässe Förderbandmodul zwei Förderbänder umfasst. Ein Modul mit nur einem Förderband, welches um eine Umlenkwalze und ein weiteres Umlenkelement, wie z.B. die oben beschriebenen dünnen Umlenkwelle, geführt ist, ist ebenfalls von der Erfindung umfasst.

### Bezugszeichenliste

- 10: Korpus
- 11: Seitenwand des Korpus
- 12: Förderband
- 13: Seitenwand des Korpus
- 14: Förderband
- 16: Begrenzungssteg
- 18: Begrenzungssteg
- 20: Übergabezunge
- 21: Übergabezunge
- 22: Umlenkwalze
- 24: Umlenkwalze
- 26: Umlenkwelle
- 28: Umlenkwelle
- 30: Anschlussplatte
- 32: Verbindungsstift
- 34: Zentrierbuchse
- 36: elektrischer Steckkontakt
- 44: Ort, unter dem Sensor angeordnet ist
- 50: Werkstückträger
- F₁: Förderrichtung
- F₂: Förderrichtung

## Patentansprüche

1. Förderbandmodul mit einem Korpus (10), an dem wenigstens eine Umlenkwalze (22) und eine weitere Umlenkwelle (26) drehbar gelagert sind, um welche ein Förderband (12) geführt ist, sowie einem Antrieb zum Antreiben wenigstens der Umlenkwalze (22), der in dem Korpus (10) angeordnet ist, wobei das Modul ferner mechanische und elektrische Verbindungselemente (32, 34, 36) zum Verbinden des Moduls mit einem Fördersystem oder einer Fertigungslinie, sowie wenigstens einen Sensor umfasst, welcher derart unter dem Förderband (12) angeordnet ist, dass auf dem Förderband transportiert werdende Objekte (50) mit Hilfe des Sensors erfassbar sind,
**dadurch gekennzeichnet, dass** das Förderband (12) auf wenigstens einer Seite des Moduls eine im Vergleich zu einem Durchmesser der Umlenkwalzen (22) dünne Umlenkwelle (26) umschlingt, um eine Übergabezunge (20) zu bilden, und
die Umlenkwelle (26) beidseitig seitlich ausserhalb des Förderbandes (12) fest in den Korpus (10) eingespannt ist, und auf der Umlenkwelle (26) mehrere voneinander beabstandete Gleitbuchsen drehbar gelagert sind, wobei die Umlenkwelle (26) über zwischen den Gleitbuchsen eingreifende Abstützelemente abgestützt ist.

2. Förderbandmodul nach Anspruch 1,
**dadurch gekennzeichnet, dass** die Gleitbuchsen aus Gleitlagerkunststoff, aus einem mit PTFE und/oder Graphit beschichteten Metall oder aus Sinterbronze bestehen.

3. Förderbandmodul nach einem der vorstehenden Ansprüche,
**dadurch gekennzeichnet, dass** es wenigstens eine zweite Umlenkwalze (24) und ein zweites weiteres Umlenkelement (28) aufweist, um die ein zweites Förderband (14) geführt ist, welches im Wesentlichen parallel zu dem ersten Förderband (12) verläuft.

4. Förderbandmodul nach Anspruch 3.
**dadurch gekennzeichnet, dass** es einen zweiten Antrieb zum Antreiben wenigstens der Umlenkwalze (24) des zweiten Förderbandes (14) aufweist.

## Claims

1. Conveyor belt module with a body (10) on which at least a deflecting roller (22) and another deflecting shaft (26) are rotatably mounted, around which a conveyor belt (12) is guided, as well as drive means for driving at least the deflecting roller (22) that is arranged in the body (10), whereby the module further comprises mechanical and electrical connection elements (32,34,36) for connecting the module to a conveyor system or a production line, and also comprises at least a sensor, that is arranged under the conveyor belt (12) such that the objects (50) which are to be transported on the conveyor belt (12) can be detected with the help of the sensor, **characterized in that**
the conveyor belt (12) winds around a thin deflecting shaft (26) compared to the diameter of the deflecting rollers (22), on at least on side of the module so as to form transfer tongue (20), and **in that** the deflecting shaft (26) is firmly clamped in the body (10) on both sides outside the conveyor belt (12), and that spaced apart sliding bushings are rotatably mounted on the deflecting shaft (26), wherein the deflecting shaft (26) is supported on support elements intervened between the sliding bushings.

2. Conveyor belt module according to claim 1, **characterized in that** the sliding brushings are made of plastic, metal coated with PTFE and/or graphite or sintered bronze.

3. Conveyor belt module according to claim 1, **characterized in that** it has at least second deflecting roller (24) and another second deflecting element (28), around which a second conveyor belt (14) is guided, which runs substantially parallel to the first conveyor belt (12).

4. Conveyor belt module according to claim 3, **characterized in that** it has second drive means for driving at least the second deflecting roller (24) of the second conveyor belt (14).

## Revendications

1. Module de bande de transport comprenant un corps (10) dans lequel sont logés au moins un rouleau de déflection (22) et un autre arbre de déflection (26) rotatifs, autour desquels une bande de transport (12) est guidée, ainsi que des moyens d'entraînement pour entraîner au moins le rouleau de défection (22) qui est agencé dans le corpus (10), le module comprenant par ailleurs des éléments de connexion (32,34,36) électriques et mécaniques pour relier le module à un système de type convoyeur ou une ligne de production, et comprend également au moins un capteur, qui est disposé sous la bande de transport (12), de telle sorte que des objets (50) destinés à être acheminés via la bande de transport puissent être détectés à l'aide du capteur, **caractérisé en ce que**
la bande de transport (12) est enroulée autour d'un arbre de déflection (26), fin comparé au diamètre des rouleaux de déflection (22), au niveau d'au moins un des côtés du module pour former une langue de transfert, et **en ce que** l'arbre de déflection (26) est fermement encastré dans le corps (10) des deux côtés en dehors de la bande de transport (12), et que plusieurs douilles coulissantes éloignées les unes des autres sont logées de manière rotative sur l'arbre de déflection (26), l'arbre de déflection (26) s'appuyant sur des éléments support agencés entre les douilles coulissantes.

2. Module de bande de transport selon la revendication 1, **caractérisé en ce que** les douilles pivotantes sont constituées de matériau plastique, d'un métal recouvert de PTFE et/ou de graphite ou de bronze fritté.

3. Module de bande de transport selon la revendication 1, **caractérisé en ce qu'**il comprend au moins un rouleau de déflection (24) et un deuxième élément de déflection (28), autour duquel une deuxième bande de transport (14) est guidée, et qui défile dans une direction substantiellement parallèle à la première bande de transport (12).

4. Module de bande de transport selon la revendication 3, **caractérisé en ce qu'**il comprend des deuxièmes moyens d'entraînement pour entraîner au moins le deuxième rouleau de défection (24) de la deuxième bande de transport (14).
